# EUROPÄISCHE PATENTSCHRIFT

(11) **EP 0 545 333 B1**
(45) Veröffentlichungstag und Bekanntmachung des Hinweises auf die Patenterteilung: **11.09.1996**
(21) Anmeldenummer: 92120386.5
(22) Anmeldetag: 28.11.1992
(51) Int. Cl.: F01B 9/02, F16J 1/10

(54) **Hubkolbenmaschine, insbesondere Brennkraftmaschine, mit hypozykloidischem Kurbelgetriebe**
Piston engine, especially an internal combustion engine, with hypocycloidal crank drive
Moteur à piston à combustion interne avec un entraînement vilebrequin hypocycloidal

(30) Priorität: 02.12.1991 DE 4139716
(43) Veröffentlichungstag der Anmeldung: 09.06.1993
(73) Patentinhaber: Bayerische Motoren Werke Aktiengesellschaft, 80788 München (DE)
(72) Erfinder: Fischer, Gert, W-8133 Feldafing (DE)

(56) Entgegenhaltungen:
- EP-A- 0 088 952
- CH-A- 266 459
- DE-A- 3 818 357
- DE-A- 3 927 593
- FR-A- 2 247 125

## Beschreibung

Die Erfindung geht gemäß dem Oberbegriff des Patentanspruches 1 von der DE-A-36 19 488 aus.

Bei dem bekannten hypozykloidischen Kurbelgetriebe einer Hubkolbenmaschine sind auf dem Hubzapfen einer Kurbelwelle zwei drehbewegliche Exzenter zur oszillierenden Hubsteuerung orthogonal zueinander geführter Schubstangen vorgesehen. Die miteinander drehfest und zueinander diametral angeordneten Exzenter sind in Lageraugen der Schubstangen jeweils in quer zur Kurbeldrehachse bzw. quer zu den Hubrichtungen der Schubstangen beweglichen Führungssteinen gelagert, um quer zur Kurbeldrehachse parallel zur Ebene des jeweiligen Lagerauges aus Toleranzabweichungen bewegter Bauteile des bekannten Kurbelgetriebes resultierende Beanspruchungen der jeweiligen Schubstangen-Kolben-Anordnung zu verringern.

Diese bekannte Anordnung zum Ausgleich von Tolerenzabweichungen durch relative Beweglichkeit miteinander antriebsfest verbundener Teile des Kurbeltriebes verringert zwar im wesentlichen Biegebelastungen der Schubstange und Seitenkräfte an den Kolben, wie dies zum Beispiel mit anderen Mitteln teilweise auch bei den bekannten hypozykloidischen Kurbelgetrieben der DE-A-37 23 950 und der US-2,271,766 erzielt ist. Jedoch erfordert die bekannte Anordnung nach der eingangs genannten DE-A-36 19 488 mit den in den Schubstangen quer zu deren Hubrichtungen schwing- bzw. verschiebebeweglich gelagerten Führungssteinen relativ großbauende Lageraugen, die bei nicht mehr in den Zylindern unterzubringenden Abmessungen in nachteiliger Weise eine Hubkolbenmaschine von relativ großen Außenmaßen bedingen. Ferner geht damit eine Erhöhung der oszillierenden Masse jeder Schubstange einschließlich der Masse des entsprechenden Ausgleichsgewichtes einher, wodurch das Gewicht der Hubkolbenmaschine sich erhöht.

Der Erfindung liegt die Aufgabe zugrunde, eine Hubkolbenmaschine der im Oberbegriff des Patentanspruches 1 beschriebenen Bauart so zu verbessern, daß die einem dynamischen Ausgleich der Toleranzabweichungen dienende relative Beweglichkeit miteinander antriebsfest verbundener Teile des Kurbelgetriebes ohne zusätzliche Mittel zwischen gegebenen Triebwerksteilen erreicht ist.

Diese Aufgabe ist mit dem Patentanspruch 1 gelöst.

Mit der erfindungsgemäßen Ausbildung der relativen Beweglichkeit zwischen der Schubstange und ihren Kolben genügt es, das einen Hubsteuerungs-Exzenter aufnehmende Lagerauge der Schubstange in den Abmessungen lediglich auf eine Maschinenleistung abgestellt zu gestalten, so daß mit dem dadurch relativ kleinbauenden Lagerauge die Schubstange bevorzugt in den Zylindern untergebracht werden kann. Damit lassen sich in vorteilhafter Weise sowohl die Außenmaße der Hubkolbenmaschine als auch die translatorisch und rotatorisch bewegten Massen des Kurbelgetriebes reduzieren.

Die bevorzugte Ausgestaltung der verschiebebeweglichen Verbindung von Schubstange und Kolben mittels an der Schubstange angeordneter Hammerköpfe ermöglicht deren gleitbewegliche Anordnung in Innen-Umfangsnuten der Kolben. Diese gegenüber herkömmlichen Kolbenbolzen bevorzugte Ausgestaltung der per se zum Beispiel aus der DE-C-29 03 325 bekannten Hammerköpfe ergibt den Vorteil, die Kolben gemäß dem Anspruch 7 in den Zylindern der Hubkolbenmaschine mit einem von außen ansetzbaren Werkzeug an der Schubstange in einer renkverschlußähnlichen Art und Weise zu montieren bzw. zu demontieren. Der vorgenannte Vorteil begründet sich in einer auch in Richtung der Kurbeldrehachse kurzbauenden Hubkolbenmaschine durch in die Zylinder vorspringend angeordnete Lagereinrichtungen des hypozykloidischen Kurbelgetriebes.

Zur lagesichernden Positionierung der mit den Hammerköpfen der Schubstange renkverschlußähnlich verbindbaren Kolben dienen erfindungsgemäß elastisch nachgiebige>lösbare Rasteinrichtungen. Derartige Rasteinrichtugen vermeiden in vorteilhafter Weise zusätzliche, von außerhalb der Zylinder in den Kolben anordbare Haltemittel. Eine bevorzugte Ausgestaltung dieser Rasteinrichtungen umfaßt nach Anspruch 7 in den Hammerköpfen zu den Kolben radial gerichtet angeordnete, federbelastete Arretierbolzen, die in Vertiefungen in den Innen-Umfangsnuten der Kolben eingreifen.

Schließlich beschreibt Anspruch 6 eine bevorzugte Weiterbildung der Rasteinrichtung, wobei die Arretierbolzen in Endabschnitten von in der Schubstange bzw. in deren Hammerköpfen vorgesehenen Schmierölleitungen öldruckbeaufschlagt angeordnet sind. Vorteilhaft ist eine derartige Weiterbildung für ein Hypozykloid-Hub- bzw. Kurbel-Getriebe, bei dem zur Erzielung orthogonal gerichteter Geradführungen ausschließlich ein auf dem Hubzapfen einer Kurbelwelle drehbeweglicher Doppelexzenter mit wenigsten einem in eine Schubstange eingreifenden Hubsteuerungs-Exzenter dient. Ist nämlich die Schubstange in einer Extremlage mit einem der Kolben in OT-Stellung und mit dem anderen Kolben in UT-Stellung, wechselt der zur Hubrichtung der Schubstange orthogonal geführte, andere Exzenter des Doppelexzenters von einer Seite der Schubstange auf die andere Seite. Da die Schubstange in den oben genannten Extremlagen aus kinematischen Gründen keinen Querbelastungen ausgesetzt ist, kann der auf die Arretierbolzen wirkende Schmieröldruck derart bestimmt sein, daß eine Relativbewegung der Schubstange gegenüber den in OT-/UT-Stellung befindlichen Kolben mehr oder weniger aufgehoben ist und somit der Seitenwechsel des Führungs-Exzenters ohne Gefahr eines Klemmens des Kurbelgetriebes gegeben ist.

Den größten Querbelastungen ist die Schubstange aus kinematischen Gründen in den zwischen den OT-/UT-Positionen der Kolben gemittelten Stellungen ausgesetzt, wobei der den Doppelexzenter tragende Hubzapfen der Kurbelwelle den Bereich größtmöglicher Entfernung von der Schubstange durchläuft. Da in diesem Bereich die aus gegebenen Toleranzabweichungen resultierenden Belastungen im wesentlichen in voller Größe quer zur Schubstange angreifen, kann der weiter oben beschriebene, in den Extremlagen der Schubstange an den Arretierbolzen wirkende Schmieröldruck in den gemittelten Stellungen der Schubstange deren Verschiebebewegungen relativ zu den Kolben vorteilhaft dämpfen.

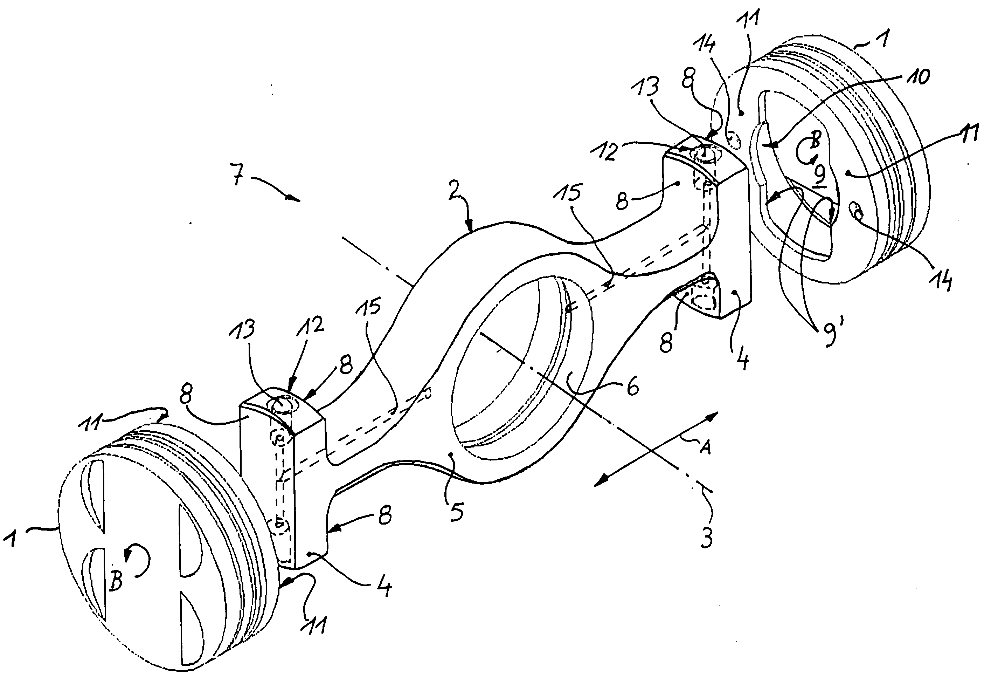

Eine nach der Erfindung gestaltete Schubstangen-Kolben-Anordnung ist in der Zeichnung dargestellt.

Eine in der Zeichnung nicht dargestellte, beispielsweise aus der P 39 27 593 bekannte Hubkolben-Brennkraftmaschine mit hypozykloidischem Kurbelgetriebe umfaßt für in diametral angeordneten Zylindern oszillierende Kolben 1 eine einteilige Schubstange 2. Diese Schubstange 2 weist an beiden kolbenseitigen Enden quer zur Kurbeldrehachse 3 bzw. quer zur Hubrichtung gemäß Pfeil A angeordnete Hammerköpfe 4 auf, die der antriebsfesten Verbindung der Schubstange 2 mit den Kolben 1 dienen.

Die Schubstange 2 weist mittig zwischen den Kammerköpfen 4 ein Lagerauge 5 auf mit einer zur Kurbeldrehachse 3 konzentrischen Lagerbohrung 6. Diese dient der Aufnahme eines aus der oben genannten P 39 27 593 bekannten Hubsteuerungs-Exzenters, der mit einem zur oszillierenden Schubstange 2 gemäß Pfeil A orthogonal geführten Führungs-Exzenter in drehfester Verbindung steht, wobei der so gebildete Doppelexzenter auf dem Hubzapfen einer um die Achse 3 rotierenden Kurbelwelle drehbeweglich angeordnet ist. Ein derart gestaltetes hypozykloidisches Kurbelgetriebe führt bei Abweichungen von Fertigungstoleranzen der bewegten Bauteile zu erheblichen Beanspruchungen der Schubstangen-Kolben-Anordnung 7, wobei die quer zur Kurbeldrehachse 3 bzw. quer zur Hubrichtung gemäß Pfeil A der Schubstange auftretenden Belastungen bzw. deren hubverlaufsabhängige Komponenten die Schubstangen-Kolben-Anordnung 7 besonders stark beanspruchen.

Diese Beanspruchungen der Schubstangen-Kolben-Anordnung 7 sind erfindungsgemäß dadurch reduziert, daß die Schubstange 2 mit jedem Kolben 1 quer zur Kurbeldrehachse 3 verschiebebeweglich verbunden ist.

Der verschiebebeweglichen Verbindung von Kolben 1 und Schubstange 2 dienen bevorzugt deren Hammerköpfe 4, die in Hubrichtung der Schubstange 2 gemäß Pfeil A parallel beabstandet angeordnete, ebene Gleitflächen 8 aufweisen zur spielbehafteten Anordnung zwischen ebenen Anschlagflächen 9, 9' in den Kolben 1. Vorzugsweise weist jeder Kolben 1 in einer vorgesehenen Innen-Umfangsnut 10 in diametralen Abschnitten 11 radial angeordnete, ebene Anschlagflächen 9, 9' auf. Weiter sind die Durchmesser der Innen-Umfangsnuten 10 und die Erstreckungen der Hammerköpfe 4 quer zur Schubstangen-Hubrichtung - Pfeil A - aufeinander für ein vorbestimmtes Spiel in Verschieberichtung abgestimmt.

Zur Positionierung jedes Kolbens 1 am jeweiligen Hammerkopf 4 der Schubstange 2 dienen lösbare Rasteinrichtungen 12. Diese umfassen vorzugsweise federbelastete Arretierbolzen 13, die in den Hammerköpfen 4 jeweils in Richtung der Verschiebewegungen der Schubstange relativ zu den Kolben 1 angeordnet sind und mit den Kolben 1 über in den Innen-Umfangs-Nuten 10 angeordnete Vertiefungen 14 (nicht gezeigt) in lösbarer Verbindung stehen. Die relative Verschiebbarkeit der Schubstange 2 gegenüber den Kolben 1 kann in den durch die OT-/UT-Kolbenstellungen gekennzeichneten Extremanlagen der Schubstange 2 dadurch reduziert sein, daß die Arretierbolzen 13 in Endabschnitten von in der Schubstange 2 bzw. in deren Hammerköpfen 4 vorgesehenen Schmierölleitungen 15 öldruckbeaufschlagt angeordnet sind. Die Druckbeaufschlagung ist ferner so abgestimmt, daß diese in einer Mittenstellung der Schubstange 2 bei den dabei auftretenden größtmöglichen, aus Toleranzabweichungen resultierenden Querbelastungen eine Dämpfung der relativen Verschiebebewegung der Schubstange 2 gegenüber den Kolben 1 ergibt.

Für den Zusammenbau der Schubstangen-Kolben-Anordnung 7 ist vorgesehen, daß der mit dem Kurbelgetriebe verbundenen Schubstange 2 in den Zylindern der Hubkolben-Brennkraftmaschine die Kolben 1 bis auf Anschlag der Hammerköpfe 4 mit kolbenbodenseitigen Anschlagflächen 9 zugeführt werden, und daß durch anschließende Drehbewegungen - gemäß Pfeil B - der Kolben 1 die Hammerköpfe 4 zwischen gegenseitig beabstandete Anschlagflächen 9, 9' in diametralen Abschnitten 11 der Innen-Umfangsnuten 10 der Kolben 1 eingeführt werden, und zwar bis die Kolben 1 durch Einrasten der Arretierbolzen 13 in Vertiefungen 14 der Innen-Umfangsnuten 10 lagegesichert an der Schubstange 2 positioniert sind.

## Patentansprüche

1. Hubkolbenmaschine, insbesondere Brennkraftmaschine, mit hypozykloidischem Kurbelgetriebe,
- umfassend eine in diametralen Zylindem angeordnete Kolben (1) verbindende Schubstange (2) mit einem Lagerauge (5) in einer quer zu einer Kurbeldrehachse (3) angeordneten Ebene, sowie
- parallel zu dieser Ebene des Lagerauges (5) quer zur Schubstangen-Hubrichtung (Pfeil A) relativ zueinander beweglich angeordnete, antriebsfest verbundene Teile des Kurbeltriebes zur Verringerung von bauteiltoleranzbedingten, dynamischen Belastungen der Schubstangen-Kolben-Anordnung (7),
dadurch gekennzeichnet,
- daß die Schubstange (2) an beiden kolbenseitigen Enden quer zur Hubrichtung (Pfeil A) parallel zur Ebene des Lagerauges (5) angeordnete Hammerköpfe (4) aufweist zum renkverschlußartigen, antriebsfesten Eingriff in nutartige Ausnehmungen (10) der Kolben (1), wobei
- in den Hammerköpfen (4) zur Lagesicherung der Kolben (1) vorgesehene lösbare Rasteinrichtungen (12) eine Verschiebebeweglichkeit der Schubstange (2) relativ zu den Kolben (1) zulassen.

2. Hubkolbenmaschine nach Anspruch 1, dadurch gekennzeichnet, daß die Schubstange (2) mit den Hammerköpfen (4) einteilig gestaltet ist.

3. Hubkolbenmaschine nach Anspruch 1 und 2, dadurch gekennzeichnet, daß die Schubstange (2) an den Hammerköpfen (4) in Hubrichtung (Pfeil A) parallel beabstandet angeordnete, ebene Gleitflächen (8) zur spielbehafteten, verschiebebeweglichen Anordnung zwischen ebenen Anschlagflächen (9, 9') in den Kolben (1) aufweist.

4. Hubkolbenmaschine nach den Ansprüchen 1 bis 3, dadurch gekennzeichnet, daß jeder Kolben (1) in einer vorgesehenen Innen-Umfangsnut (10) in diametralen Abschnitten (11) radial angeordnete Anschlagflächen (9, 9') aufweist.

5. Hubkolbenmaschine nach den Ansprüchen 1 bis 4, dadurch gekennzeichnet,
- daß die Rasteinrichtungen (12) federbelastete Arretierbolzen (13) umfassen, die
- in den Hammerköpfen (4) jeweils in Richtung der Verschiebebewegungen der Schubstange (2) relativ zu den Kolben (1) angeordnet sind, und
- mit den Kolben (1) über in den Innen-Umfangsnuten (10) angeordnete Vertiefungen (14) in lösbarer Verbindung stehen.

6. Hubkolbenmaschine nach den Ansprüchen 1 bis 5, dadurch gekennzeichnet, daß die Arretierbolzen (13) in Endabschnitten von in der Schubstange (2) bzw. in deren Hammerköpfen (4) vorgesehenen Schmierölleitungen (15) öldruckbeaufschlagt angeordnet sind.

7. Montageverfahren für eine Hubkolbenmaschine nach den Ansprüchen 1 bis 6, dadurch gekennzeichnet,
- daß der mit dem Kurbelgetriebe verbundenen Schubstange (2) in den Zylindem die Kolben (1) bis auf Anschlag der Hammerköpfe (4) mit kolbenbodenseitigen Anschlagflächen (9) axial zugeführt werden, und
- daß durch anschließende Drehbewegungen (Pfeile B) der Kolben (1) die Hammerköpfe (4) zwischen gegenseitig beabstandete Anschlagflächen (9, 9') in diametralen Abschnitten (11) der Innen-Umfangs-nuten (10) der Kolben (1) eingeführt werden, und zwar
- bis die renkverschlußartig betätigten Kolben (1) durch Einrasten der Arretierbolzen (13) in Vertiefungen (14) der Innen-Umfangsnuten (10) lagegesichert an der Schubstange (2) positioniert sind.

## Claims

1. A reciprocating engine, especially an internal combustion engine, with a hypocycloidal crank mechanism,
- comprising a connecting rod (2), connecting pistons (1) arranged in diametral cylinders, with a bearing eye (5) in a plane extending transversely to an axis of rotation (3) of the crank, as well as
- drive-fixed connected parts of the crank mechanism extending parallel to this plane of the bearing eye (5) transversely to the direction of stroke (arrow A) of the connecting rod and movable relative to each other to reduce dynamic loads on the connecting rod/ piston arrangement (7) resulting from the tolerances of the component parts,
characterised in that
- the connecting rod (2) is provided with hammer heads (4) on both piston-side ends transversely to the direction of stroke (arrow A) parallel to the plane of the bearing eye (5) for the bayonet-like drive-fixed engagement in groove-like recesses (10) of the piston (1), whereby
- locking devices (12) provided in the hammer heads (4) to secure the position of the pistons (1) allow a displacement motion of the connecting rod (2) relative to the piston (1).

2. A reciprocating engine according to claim 1, characterised in that the connecting rod (2) with the hammer heads (4) is unipartite.

3. A reciprocating engine according to claim 1 and claim 2, characterised in that the connecting rod (2) is provided on the hammer heads (4) in the direction of stroke (arrow A) with flat sliding surfaces (8) arranged at a distance apart and parallel to one another for the displacement with play arrangement between flat stop surfaces (9, 9') in the piston (1).

4. A reciprocating engine according to any one of claims 1 to 3, characterised in that each piston (1) has radially-arranged stop surfaces (9, 9') in diametral sections in an inner circumferential groove (10).

5. A reciprocating engine according to any one of claims 1 to 4, characterised in that
- the locking devices (12) comprise spring-loaded locking bolts (13) which
- are arranged in the hammer heads (4) in each case in the direction of displacement of the connecting rod (2) relative to the piston (1), and
- are in detachable connection with the piston (1) via recesses (14) in the inner circumferential grooves (10).

6. A reciprocating engine according to any one of claims 1 to 5, characterised in that the locking bolts (13) are arranged in end sections of lubricating oil lines (15) provided in the connecting rod (2) or in its hammer heads (4) and are subject to oil pressure.

7. A method of assembly for a reciprocating engine according to claims 1 to 6, characterised in that
- the pistons (1) up to impingement of the hammer heads (4) against the stop surfaces (9) are axially moved towards the connecting rod (2) in the cylinders connected to the crank mechanism
- through subsequent rotational movements (arrow B) of the piston (1), the hammer heads (4) are introduced into diametral sections (11) of the inner circumferential grooves (10) of the pistons (1) between stop surfaces (9, 9') at a distance apart, and
- this is continued until such time as the bayonet-like actuated pistons (1) are securely positioned on the connecting rod (2) through engagement of the locking bolts (13) in recesses (14) in the inner circumferential grooves (10).

## Revendications

1. Moteur à pistons linéaires, notamment moteur à combustion interne avec une transmission à vilebrequin hypocycloïdal, comportant
- une tige de poussée (2) reliant des pistons (1) logés dans des cylindres diamétralement opposés, cette tige ayant un oeillet de palier (5) dans un plan transversal à l'axe de rotation (3) du vilebrequin ainsi que :
- parallèlement à ce plan de l'oeillet de palier (5), transversalement à la direction de translation de la tige de poussée (flèche A), des pièces mobiles relativement l'une par rapport à l'autre, solidaires en transmission de mouvement de la transmission à vilebrequin, pour réduire les contraintes dynamiques provoquées par les tolérances et s'exerçant sur le dispositif pistons-tige de poussée (7),
caractérisé en ce que :
- la tige de poussée (2) est munie à ses deux extrémités, du côté des pistons, transversalement à la direction de translation (flèche A), de têtes de marteau (4) parallèles au plan de l'oeillet de palier (5), pour être reliées suivant une liaison de type baïonnette par une liaison de transmission de mouvement dans des cavités (10) en forme de rainures, des pistons (1),
- les têtes de marteau (4) ayant des dispositifs d'encliquetage (12) amovibles pour fixer la position des pistons (1) et autorisant une mobilité en translation de la tige de poussée (2) par rapport aux pistons (1).

2. Moteur à pistons linéaires selon la revendication 1,
caractérisé en ce que
la tige de poussée (2) fait corps avec les têtes de marteau (4).

3. Moteur à pistons linéaires selon les revendications 1 et 2,
caractérisé en ce que
la tige de poussée (2) comporte sur les têtes de marteau (4), les surfaces de glissement (8), planes, écartées parallèlement dans la direction de translation (flèche A) sur les têtes de marteau (4), pour permettre un montage avec du jeu, et une mobilité en coulissement, entre les surfaces de butée planes (9, 9') dans les pistons (1).

4. Moteur à pistons linéaires selon les revendications 1 à 3,
caractérisé en ce que
chaque piston (1) comporte des surfaces de butée (9, 9') radiales dans les segments diamétraux (11) dans une rainure périphérique intérieure (10).

5. Moteur à pistons linéaires selon les revendications 1 à 4,
caractérisé en ce que :
- les dispositifs d'encliquetage (12) comprennent des goujons de blocage (13) chargés par ressort,
- ces goujons sont prévus dans les têtes de marteau (4) chaque fois dans la direction des mouvements de coulissement de la tige de poussée (2) par rapport aux pistons (1), et
- ces goujons forment une liaison amovible avec les pistons (1) par l'intermédiaire de cavités (14) prévues dans les rainures périphériques intérieures (10).

6. Moteur à pistons linéaires selon l'une des revendications 1 à 5,
caractérisé en ce que
les goujons de blocage (13) sont prévus dans les segments d'extrémité de conduites d'huile de graissage (15) alimentées en huile sous pression, dans la tige de poussée (2) ou dans ses têtes de marteau (4).

7. Procédé de montage d'un moteur à pistons linéaires selon l'une des revendications 1 à 6,
caractérisé en ce que
- on place la tige de poussée (2) reliée à la transmission à vilebrequin dans les cylindres contre les pistons (1) jusqu'à ce que les têtes de marteau (4) soient axialement en butée contre les surfaces de butée (9) des fonds de piston,
- puis on tourne (flèche B) les pistons (1) pour introduire les têtes de marteau (4) entre les surfaces de butée (9, 9') écartées l'une par rapport à l'autre dans les segments diamétraux (11) des rainures périphériques intérieures (10) des pistons (1) et cela :
jusqu'à ce que les pistons (1) actionnés à la manière des liaisons de type baïonnette, soient positionnés par accrochage des goujons de blocage (13) dans des cavités (14) des rainures périphériques intérieures (10) en étant maintenus en position contre la tige de poussée (2).
